# EUROPÄISCHE PATENTSCHRIFT

(11) **EP 1 561 633 B1**
(45) Veröffentlichungstag und Bekanntmachung des Hinweises auf die Patenterteilung: **08.12.2010**
(21) Anmeldenummer: 04027614.9
(22) Anmeldetag: 20.11.2004
(51) Int. Cl.: B60N 2/28

(54) **Auto-Kindersitz**
Vehicle child seat
Siège enfant pour véhicule automobile

(30) Priorität: 04.02.2004 DE 102004005624
(43) Veröffentlichungstag der Anmeldung: 10.08.2005
(73) Patentinhaber: Recaro GmbH & Co. KG, 73230 Kirchheim/Teck (DE)
(72) Erfinder: Kespohl, Horst-Günther, 73101 Aichelberg (DE)
(74) Vertreter: Küchler, Stefan

(56) Entgegenhaltungen:
- EP-A1- 1 110 806
- EP-A1- 1 369 296
- EP-A2- 0 822 115
- EP-A2- 1 077 152
- EP-A2- 1 344 678

## Beschreibung

Die Erfindung richtet sich auf einen Auto-Kindersitz mit einer Sitzfläche, einer Rückenlehne, ggf. mit seitlichen Arm lehnen und/oder Kopfstützen, mit seitlichen Führungen zum Einlegen des Gurtes eines Autos, sowie mit wenigstens einer Vorrichtung zur selbsttätigen Straffung des Autogurtes und mit einer Vorrichtung zur Verstellung der Neigung des Auto-Kindersitzes gegenüber einem fahrzeugeigenen Sitz, wobei der fahrzeugeigene Gurt die Rückenlehne des Kindersitzes umgreift, und wobei die Vorrichtung zur selbsttätigen Straffung des Autogurtes Oberflächenbereiche aufweist, welche elastisch nach vorne gedrückt werden, um dem Gurt bei Bedarf einen gewissen Bewegungsspielraum zu verleihen.

Je nach Alter und Körpergröße werden Kinder in Auto-Kindersitzen entweder mit einem sitzeigenen Gurt oder mit einem Dreipunktgurt des Autos selbst angegurtet. Wenn die Kinder mit einem sitzeigenen Gurt angeschnallt werden, so wird oft der fahrzeugeigene Gurt verwendet, um den Kindersitz selbst zu fixieren. Manchmal wird ein solcher fahrzeugeigener Gurt an wenigstens einer Stelle mit dem Kindersitz verbunden, bspw. eingeklemmt, damit der Kindersitz trotz der zumeist vorhandenen, fahrzeugeigenen Aufrollautomatik möglichst gut verankert ist.

In jedem Fall ist es wichtig, dass alle beteiligten Gurte stets straff gespannt sind, damit bei einer plötzlichen Verzögerung des Fahrzeugs, insbesondere bei einem Unfall, das angeschnallte Kind sicher an seinem Platz gehalten wird.

Andererseits ist es jedoch wünschenswert, einem Kind neben der aufrechten Sitzposition auch - insbesondere für lange Urlaubsfahrten - eine stärker geneigte Entspannungsposition anzubieten. Dies ist jedoch bei einer innigen Verbindung des betreffenden Kindersitzes mit einem straff gespannten, fahrzeugeigenen Gurt nicht möglich.

Eine gattungsgemäße Anordnung ist aus dem deutschen Gebrauchsmuster G 91 15 290.0 bekannt. Allerdings ist dort die Rückseite der Sitzlehne in Längsrichtung konvex gewölbt, so dass bei einer Verstellung des Neigungswinkels des Sitzes unterschiedliche Bereiche der Rückenlehne an dem Autositz anliegen, jeweils andere Bereiche jedoch nicht. Bspw. liegt der Kindersitz bei aufrechter Position mit seinem unteren Lehnenbereich an dem Autositz an, in geneigter Position dagegen mit dem oberen Lehnenbereich, während sodann der untere Lehnenbereich weit nach vorne verlagert ist und dem Sitz keinen Halt geben kann. Wenn in diesem Zustand der Autogurt nicht straff gespannt ist, bspw. weil das Kind mit dem Gurt spielt, so kann der Sitz bei einer plötzlichen Verzögerung nach vorne kippen und verliert dann gänzlich den Kontakt zu der fahrzeugeigenen Sitzlehne. Die Folge ist eine völlig unkontrollierte Bewegung, der Kindersitz samt darin sitzendem Kind wird zum Spielball hoher Trägheitskräfte und Leib und Leben des Kindes sind in Gefahr.

Die EP 0 822 115 A2 betrifft einen Kindersitz zur Verwendung in einem Fahrzeug, welcher auf einem fahrzeugeigenen Sitz aufgesetzt und mit den fahrzeugeigenen Gurten verankert wird. Allerdings ist dort für die fahrzeugeigenen Gurte eine Passage hinter der eigentlichen Rückenlehne vorgesehen, so dass bei einer Verstellung der eigentlichen Rückenlehne der Gurtverlauf überhaupt nicht verändert wird. Allerdings ist die geteilte Rückenlehne sehr aufwendig und daher unwirtschaftlich.

Ähnliches gilt für die EP 1 077 152 A2. Auch bei der dort offenbarten Anordnung verläuft der fahrzeugeigene Gurt hinter einem nach vorne klappbaren Teil der Rückenlehne und wird daher durch eine Neigungsverstellung dieses Teils nicht beeinflußt. Jedoch ist auch diese Anordnung für die Praxis konstruktiv viel zu kompliziert und aufwendig.

Aus den Nachteilen des beschriebenen Standes der Technik resultiert das die Erfindung initiierende Problem, eine Vorrichtung zu entwickeln, die eine Verstellung des Kindersitzes hinsichtlich dessen Neigung mit einem möglichst geringen Konstruktionsaufwand erlaubt, dabei aber dennoch stets für einen optimalen Halt des Kindersitzes auf dem fahrzeugeigenen Sitz sorgt.

Die Lösung dieses Problems gelingt bei einem gattungsgemäßen Auto-Kindersitz dadurch, dass die Vorrichtung zur selbsttätigen Straffung des Autogurtes Gurtstraffer aufweist, die im Bereich der Gurtführungen für den über das Becken verlaufenden Strang des Auto- Dreipunktgurtes angeordnet sind und an diesen Stellen auf den Beckengurt einwirken sowie zumindest an einer Seite des Sitzes gleichzeitig auch auf den Schultergurt dank dessen Verlaufs in großer räumlicher Nähe, derart, dass die von einem Gurtstraffer geleistete Längenausgleichsfähigkeit des Gurtes insgesamt verdreifacht ist, und wobei im oberen Bereich der Rückenlehne wenigstens eine Vorrichtung zur unverschieblichen Fixierung des Auto-Schultergurtes gegenüber dem Auto-Kindersitz vorgesehen ist, insbesondere durch festes Einklemmen des Auto-Schultergurtes.

Die Erfindung wählt diese Bereiche für eine Einflußnahme auf einen fahrzeugeigenen Gurt, weil hier der Gurtverlauf unabhängig von der Ausführungsform des Fahrzeugs und des Gurtes sowie unabhängig von der Körpergröße des Kindes vorgegeben und daher stets bekannt ist. Es bieten sich besonders die Gurtführungen für den über das Becken verlaufenden Strang eines Dreipunktgurtes an, weil dieser üblicherweise etwa symmetrisch zur Mitte des Kindersitzes verläuft, so dass stets alle an diesen Stellen vorgesehenen Gurtstraffungsvorrichtungen aktiv sind und sich ihre Wirkungen addieren können. Außerdem kann hier zumindest an einer Seite des Sitzes gleichzeitig auch auf den Schultergurt dank dessen Verlaufs in großer räumlicher Nähe straffend eingewirkt werden, wodurch einerseits die von der Gurtstraffungseinrichtung geleistete Längenausgleichsfähigkeit des Gurtes insgesamt verdreifacht und also weiter verbessert. Erst dadurch wird es möglich, den Schultergurt im Schulterbereich an dem Kindersitz zu fixieren, bspw. festzuklemmen. Denn in diesem Fall ist die auf den Schultergurt einwirkende Spannkraft der fahrzeugeigenen Gurtaufrollautomatik jenseits einer solchen Klemmvorrichtung nicht mehr wirksam und kann daher zu einer Gurtstraffung in diesem Bereich jenseits der Klemmung nicht mehr beitragen; diese Aufgabe muß nunmehr gänzlich von der kindersitzseitigen Gurtstraffungsvorrichtung erfüllt werden. Andererseits kann sich der Kindersitz solchenfalls vor allem im unteren Lehnenbereich gegenüber dem Autositz bewegen, während dessen obere Lehnenkante infolge einer erfindungsgemäßen, weitgehend ebenen Rückseite der Lehne des Kindersitzes immer in Kontakt mit dem Autositz bleibt. Daher verharrt die fahrzeugeigene Gurtaufrollautomatik immer in einem unverändert gespannten Zustand und ist deshalb jederzeit für den Ernstfall bereit, den Kindersitz vor unerwünschten Bewegungen relativ zu dem Fahrzeugsitz zu bewahren.

Der Straffung eines fahrzeugeigenen Gurtes kann auch eine Vorrichtung zur Verstellung der Neigung des Auto-Kindersitzes gegenüber einem fahrzeugeigenen Sitz dienen, da solchenfalls auch der Gurtverlauf beeinflußt wird, insbesondere dann, wenn sich bei einer Sitzneigungsverstellung auch die Gurtführungseinrichtungen gegenüber der Gurtverankerung an dem Fahrzeug verlagern.

Es hat sich als günstig erwiesen, dass die Vorrichtung zur Gurtstraffung ein zumindest bereichsweise gegenüber der Sitzlehne und/oder -fläche bewegliches Element aufweist. Infolge dieser Bewegungsmöglichkeit ist ein solches Element bestrebt, auf den daran vorbeilaufenden Gurt einzuwirken und diesen aus seinem an dieser Stelle ansonsten gerade gestreckten oder zumindest weniger abgelenkten Verlauf (weiter) auszulenken, wodurch sich die benötigte Gurtlänge erhöht und der Gurt somit gestrafft wird.

Es liegt im Rahmen der Erfindung, dass das bewegliche Element der Vorrichtung zur Gurtstraffung etwa lotrecht zu der Gurtebene im Bereich der Gurtführung beweglich, insbesondere geführt, ist. Dabei berücksichtigt die Erfindung, dass der Gurt zwar auch innerhalb seiner Gurtebene aus seinem sonstigen Verlauf ausgelenkt werden kann; dabei wirft der Gurt jedoch Falten, so dass sich ein ungleichmäßiges und daher ungünstiges Spannungsprofil innerhalb des Gurtes ergibt. Diese Nachteile werden umgangen, wenn der Gurt etwa lotrecht zu seiner Ebene ausgelenkt wird, was über seine ganze Breite hinweg gleichmäßig erfolgen kann.

Weitere Vorteile ergeben sich dadurch, dass das bewegliche Element der Vorrichtung zur Gurtstraffung etwa in Fahrtrichtung des Autos beweglich, insbesondere geführt, ist. Dabei findet die Tatsache Berücksichtigung, dass ein fahrzeugeigener Gurt in angeschnalltem Zustand eine überwiegend quer zur Fahrtrichtung verlaufende Erstreckung und Gurtebene hat.

In Weiterverfolgung des Erfindungsgedankens können zur Führung des beweglichen Elements der Vorrichtung zur Gurtstraffung an dessen Rückseite eine oder mehrere Vertiefungen und/oder Fortsätze vorgesehen sein, die mit (je) einem darin eingreifenden Fortsatz oder einer diese(n) aufnehmenden Vertiefung in der Sitz- oder Armlehne oder Arm- bzw. Seitenstütze zusammenwirken. Außerhalb der Gurtführungen wird der Gurtverlauf durch verschiedene Parameter beeinflußt und ist daher ebenso wenig bekannt wie die aus der Gurtstraffung resultierende, auf das bewegliche Element einwirkende Kraft. Damit dieses nicht beschädigt werden kann, ist eine definierte Auslenkung wichtig, die durch eine (Linear-) Führung sichergestellt wird. Natürlich könnte mit der Führungsvorrichtung auch eine Schwenkbewegung vorgegeben werden. Solchenfalls sollte die Schwenkachse allerdings etwa parallel zu der Gurtebene und überdies vorzugsweise quer zu der Längsrichtung des Gurtes orientiert sein, damit der Gurt über seine gesamte Breite hinweg etwa gleichmäßig ausgelenkt wird.

Diese Ausführungsform der Erfindung zeichnet sich weiterhin aus durch ein oder mehrere Federelemente, welche das bewegliche Element der Vorrichtung zur Gurtstraffung in Richtung auf den Autogurt zu drücken bestrebt sind. Da sich das bewegliche Element in seiner geführten Richtung zwischen begrenzenden (Anschlag-) Elementen frei bewegen kann, läßt sich mit den Federelementen ein Kräftegleichgewicht zu der den Gurt straffenden Spannung erzeugen. Hierzu muß der Gurt nur so weit angezogen werden, dass das bewegliche Element entgegen der rückstellenden Kraft eines Federelements ausgelenkt und dadurch die betreffende Feder gespannt wird.

Wenigstens ein Federelement kann durch eine Druckfeder gebildet sein, die zwischen dem beweglichen Element und der Sitz- oder Armlehne oder Arm- bzw. Seitenstütze angeordnet ist. Damit ein Gurt in eine Gurtführung ohne Durchfädeln einlegbar ist, muß diese etwa die Form eines Schlitzes haben. Der Gurt liegt bevorzugt an einem Randbereich eines solchen Schlitzes an, insbesondere an dem in Fahrtrichtung gesehen hinteren. Indem dieser (hintere) Randbereich der Gurtführung durch wenigstens ein (integriertes) Federelement nach vorne gedrückt wird, kann der Gurtverlauf verlängert und damit der Gurt gespannt werden. Wird ein solches Federelement zwischen diesem beweglichen Randbereich und dem Sitzkorpus integriert, so ergibt sich eine platzsparende Anordnung; außerdem wird die Verletzungsgefahr minimiert. Die Verwendung von Druckfedern führt zu einer besonders einfachen Konstruktion.

Im Rahmen einer solchen Anordnung läßt sich wenigstens ein Federelement als Schraubenfeder ausbilden, die in einer Ausnehmung oder durch einen Fortsatz des beweglichen Elements der Vorrichtung zur Gurtstraffung oder der Sitz- oder Armlehne oder Arm- bzw. Schulterstütze geführt ist. Mit Schraubenfedern läßt sich eine gewünschte Federcharakteristik optimal einstellen; sie sind einfach, preiswert und verschleißfrei.

Die Erfindung sieht weiterhin vor, dass wenigstens ein Element der Vorrichtung zur Gurtstraffung elastisch ist. Diese Elastizität dient dem selben Zweck wie das Federelement bei der zuvor beschriebenen Ausführungsform, nämlich der Schaffung eines Kräftegleichgewichts zu der den Gurt straffenden Spannung.

Dabei sollte wenigstens ein Element der Vorrichtung zur Gurtstraffung aus einem elastischen Material mit einer Shore-Härte zwischen 30 und 80 bestehen, vorzugsweise mit einer Shore-Härte von 40 bis 70, insbesondere von 50 bis 60. Hierbei ist vor allem an vergleichsweise weiche Werkstoffe zu denken wie Gummi (Hartgummi), verformbaren (weichen) Kunststoffen oder einem Schaumstoff (Hartschaum).

Sofern es bspw. Schwierigkeiten bereitet, allein mit den Werkstoffeigenschaften eine geeignete Elastizität zu realisieren, so kann wenigstens ein Element der Vorrichtung zur Gurtstraffung die Elastizität erhöhende Ausnehmungen, insbesondere Durchbrechungen und/oder Hohlräume, aufweisen. Derartige Ausnehmungen schwächen das betreffende Element und erhöhen damit dessen Elastizität. Sofern derartige Durchbrechungen über ihre Tiefe einen gleichbleibenden Querschnitt aufweisen, bleibt die resultierende Feder- oder Elastizitätskonstante in weiten Grenzen konstant. Mit einem sich verändernden Querschnitt haben dagegen nichtlineare Feder- oder Elastizitätscharakterisitka zur Folge.

Die Vorrichtung zur Verstellung der Neigung des Auto-Kindersitzes kann derart konstruiert sein, dass sich die Sitzneigung im Ganzen verstellt, d.h., ohne Relativbewegung der Rückenlehne gegenüber der Sitzfläche. Dadurch läßt sich der Sitz als einteilige Sitzschale konzipieren, die auch hohen Belastungen im Fall eines Unfalls ohne jegliche Beschädigungen zu widerstehen vermag.

Vorzugsweise dient der Neigungsverstellung des Kindersitzes ein an der Unter- oder Rückseite des Kindersitzes angelenktes, platten- oder rahmenförmiges Teil. Dieses ist in seinen Lagerpunkten beweglich mit dem Kindersitz verbunden und beeinflußt vor allem die Lage des unteren Sitzteils, beispielsweise indem es an einer geeigneten Stelle gegen das Autositzpolster gepreßt wird.. Beispielsweise kann dadurch der untere Sitzteil gegenüber der Lehne des Autositzes nach vorne gedrückt werden, um die Neigung zu erhöhen; unterstützend dazu könnte sich auch die Oberkante der Lehne des Kindersitzes in das Polster des Fahrzeugsitzes hineinpressen, verliert jedoch nie den Kontakt zu dem Fahrzeugsitz. Dadurch erhält dieser obere Sitzbereich einen sehr großen Halt, insbesondere Seitenhalt, gerade auch im Hinblick auf die nicht unerheblichen Seitenkräfte bei Kurvenfahrten.

Indem eine solche Vorrichtung zur Verstellung der Neigung des Auto-Kindersitzes durch ein um eine quer zur Sitz- bzw. Fahrtrichtung verlaufende Achse verschwenkbares platten- oder rahmenförmiges Teil an der Unter- oder Rückseite des Sitzes gebildet ist, so ist die Neigung der einem Kind dargebotenen Sitz- und/oder Lehnenfläche gegenüber einem an dem fahrzeugeigenen Sitz anliegenden Element besonders sensibel beeinflußbar. Dieses an dem Fahrzeugsitz anliegende Element stützt sich auf dem Fahrzeugsitz ab und drückt die Sitzschale an der betreffenden Stelle in variablem Maß von dem Fahrzeugsitz weg. Indem dabei die Sitzschale in ihren entfernteren Bereichen nur wenig gegenüber dem Fahrzeugsitz verlagert wird, läßt sich über eine Verstellung des verschwenkbaren Teils eine Neigungsverstellung des Kindersitzes erreichen, ohne jedoch dessen seitliche Neigung zu verändern. Der Kindersitz kann daher auch bei sportlicher Kurvenfahrt nicht wanken.

Das verschwenkbare platten- oder rahmenförmige Teil ist bezüglich der Neigungsverstellung des Kindersitzes am effektivsten, wenn seine von der Schwenkachse am weitesten beabstandeten Bereiche entweder in der Nähe der Vorderkante der Sitzfläche oder in der Nähe der Oberkante der Rückenlehne liegen. Dies wird dadurch erreicht, dass die Schwenkachse des verschwenkbaren Teils etwa im Bereich des Übergangs von der Sitzfläche in die Rückenlehne angeordnet ist, vorzugsweise im rückwärtigen Bereich des Sitzbodens, insbesondere unterhalb der Rückenlehne.

Zur Vereinfachung der Konstruktion kann die Schwenkachse durch zwei seitliche Achsstummel an dem verschwenkbaren Teil gebildet sein. Diese können mit dem verschwenkbaren Teil integriert sein, bspw. in Form eines einzigen Kunststoffspritzgußteiles.

Der Neigungswinkel des verschwenkbaren, platten- oder rahmenförmigen Teils gegenüber dem Sitzboden wird vorzugsweise mit einer manuell betätigbaren Einrichtung eingestellt.

Vorzugsweise verfügt eine derartige Einrichtung zur Einstellung des Neigungswinkels des verschwenkbaren Teils über wenigstens ein nockenförmiges Element, das sich in dem Bereich zwischen dem Sitz und dessen verschwenkbarem Element befindet. Je nach der (Dreh-) Stellung eines derartigen Nockens wird das verschwenkbare Teil an der betreffenden Stelle in variierbarem Umfang von der Außen- und/oder Unterseite des Kindersitzes abgespreizt.

Damit das verschwenkbare Teil möglichst vollständig an die Sitzaußen- und/oder - unterseite heranschwenkbar ist, sollte wenigstens ein Nocken in eine Vertiefung an der Sitzaußen- und/oder -unterseite einschwenkbar ausgebildet sein. Wenn der Nocken mit seinem hervorstehenden Umfangsbereich in diese Vertiefung eintaucht, steht er kaum über die betreffende Sitzfläche hervor und erlaubt einen etwa parallelen Verlauf zwischen der betreffenden Sitzaußen- und/oder - unterfläche und dem verschwenkbaren Teil. Die den Nocken aufnehmende Vertiefung könnte bspw. in eine Armlehne oder Kopfstütze des Kindersitzes integriert sein.

Zur Vermeidung von Verwindungen des Kindersitzes und/oder des verschwenkbaren Elements sollten zwei Nocken vorhanden sein, die solchenfalls auf einer gemeinsamen Achse angeordnet sein können, die eine simultane Verstellung dieser Nocken herbeiführt. In jedem Fall, auch bei Verwendung nur eines einzigen Nockens, kann eine solche den/die Nocken tragende Achse bis zu wenigstens einer Seite des Auto-Kindersitzes verlaufen und dort mit einem Bedienungselement zur Drehverstellung versehen sein. Ein solches Bedienungselement könnte bspw. eine Kurbel sein oder ein Handrad. In letzterem Fall können an dem Handrad, insbesondere an dessen Umfang, auch Rastelemente, bspw. Vertiefungen oder Fortsätze vorgesehen sein, mit denen die Drehstellung in bestimmten Positionen fixierbar ist, wenn dazu komplementäre Elemente des Sitzes darin oder daran einrasten.

Die Nockenachse erstreckt sich vorzugsweise innerhalb einer Ausnehmung der Sitzaußen- oder -unterseite; dort befindet sich dann auch ihre Lagerung. Eine solche Lagerung kann als Gleitlager ausgebildet sein, bspw. als die Achse eng umgreifende Bohrung oder Schlitz in einem bspw. scheibenförmigen Element an der Sitzaußen- oder -unterseite.

Mit einer Einrichtung zur Begrenzung des Schwenkwinkels des verschwenkbaren, platten- oder rahmenförmigen Elements wird sichergestellt, dass dieses Element beim Abnehmen des Kindersitzes von einem Fahrzeugsitz nicht unkontrolliert umherschwingt. Als derartige Einrichtung zur Begrenzung des Schwenkwinkels kommt bspw. ein Band, Schlaufe od. dgl. in Betracht, das an dem verschwenkbaren Teil einerseits und an dem Auto-Kindersitz andererseits fixiert oder fixierbar ist, und dessen freie Länge zwischen diesen Fixierungspunkten den maximalen Schwenkwinkel bestimmt.

Schließlich entspricht es der Lehre der Erfindung, dass die Einrichtung zur Begrenzung des Schwenkwinkels als die Nockenachse umschlingende Schlaufe ausgebildet ist. Durch eine derartige Verankerung des verschwenkbaren Elements an der Nockenachse besteht die Möglichkeit, bei Bedarf mit wenigen Handgriffen die gesamte Einrichtung zur Neigungsverstellung von der Sitzschale zu lösen, indem bspw. die Nockenachse einerseits und die Schwenkachse (-nstummel) andererseits aus bspw. schlitzförmigen Lagerungsaufnahmen herausgenommen wird.

Weitere Merkmale, Eigenschaften, Vorteile und Wirkungen der Erfindung ergeben sich aus der folgenden Beschreibung bevorzugter Ausführungsformen der Erfindung sowie anhand der Zeichnung. Hierbei zeigt:
- Fig. 1: einen erfindungsgemäßen Auto-Kindersitz in einer perspektivischen Darstellung;
- Fig. 2: eine Sprengdarstellung des Unterteiles des Kindersitzes aus Fig. 1;
- Fig. 3: eine Seitenansicht auf die Fig. 1 in aufrechter Sitzposition, teilweise abgebrochen;
- Fig.4: eine der Fig. 3 entsprechende Darstellung nach Kippen des Kindersitzes;
- Fig. 5: den Bereich einer rückwärtigen Gurtführung des Kindersitzes aus Fig. 1 in einer zu der betreffenden Seitenlehne parallelen Schnittdarstellung;
- Fig. 6: eine abgewandelte Ausführungsform der Erfindung in einer der Fig. 5 entsprechenden Darstellung;

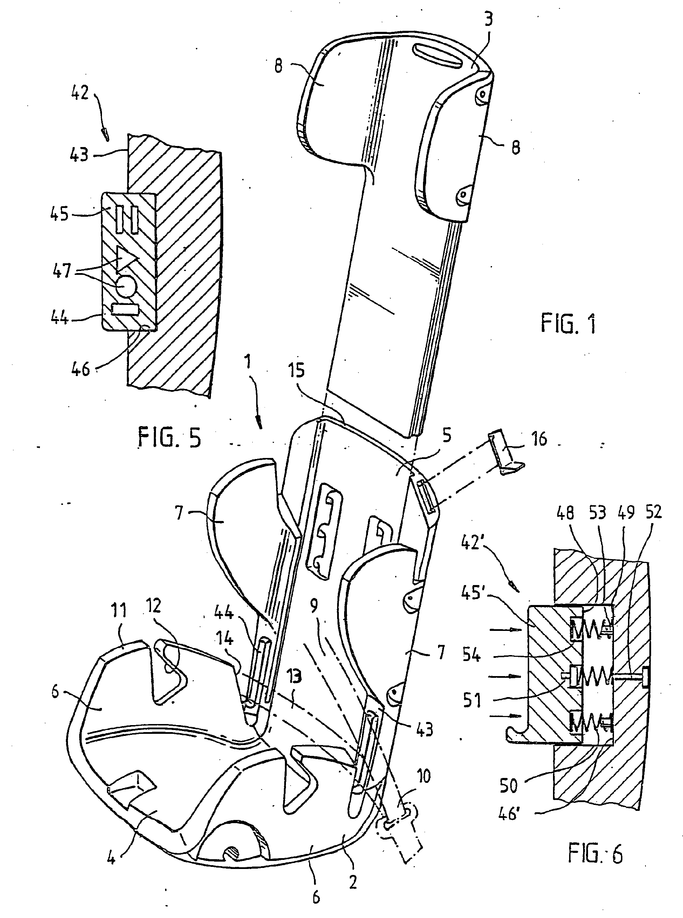

Der Kindersitz 1 aus Fig. 1 besteht aus einer in sich steifen Sitzschale 2 und aus einer daran in vertikaler Richtung verstellbaren Kopfstütze 3. Die Sitzschale 2 umfaßt die eigentliche Sitzfläche 4, die Rückenlehne 5, zwei Armlehnen 6 sowie zwei Arm- oder Schulterstützen 7. Die beiden Arm- oder Schulterstützen 7 haben etwa den selben gegenseitigen Abstand wie die beiden Armlehnen 6. Der Abstand der Seitenteile 8 der Kopfstütze 3 ist dagegen kleiner, so dass die Kopfstütze 3 samt ihrer Seitenteile 8 - an der Rückenlehne 5 geführt - weit nach unten geschoben werden kann, wobei die Kopfstützen-Seitenteile 8 derart zwischen die Arm- oder Schulterstützen 7 gelangen, dass dazwischen immer noch ein Freiraum für den Schultergurt 9 eines fahrzeugeigenen Gurtes 10 verbleibt.

In dieser maximal nach unten geschobenen Position der Kopfstütze 3 eignet sich der Kindersitz 1 für kleine Kinder unter etwa 3 Jahren. Da für diese der fahrzeugeigene Gurt 10 nicht geeignet ist, gibt es für Kleinkinder einen eigenen Gurt des Kindersitzes 1, vorzugsweise nach Art eines Hosenträgergurtes. Dieser soll nicht primär Gegenstand der vorliegenden Erfindung sein.

Der fahrzeugeigene Gurt 10 wird stets verwendet, sowohl bei Kindern unter etwa 3 Jahren als auch bei Kindern darüber. Zum Angurten der letzteren sind in den beiden Armlehnen 6 zu deren Oberseiten 11 hin offene Führungs-Vertiefungen 12 zum Einlegen des Beckenteiles 13 des fahrzeugeigenen Gurtes 10 vorhanden. Diese Vertiefungen 12 befinden sich in Längsrichtung der Armlehnen 6 gesehen etwa in deren Mitte.

Bei Kindern unter etwa 3 Jahren wird der Fahrzeuggurt 10 dagegen nur zur Fixierung des Kindersitzes 1 auf einem Fahrzeugsitz verwendet. Zu diesem Zweck befindet sich je eine weitere, schlitzförmige, nach oben offene Vertiefung 14 am rückwärtigen Ende jeder Armlehne 6, knapp oder direkt vor der Rückenlehne 5. Wenn der Beckenteil 13 des fahrzeugeigenen Gurtes 10 hier eingelegt wird, umgreift er nur die Rückenlehne 5, während das Kind vor dem Gurt 10 sitzt. Um den Kindersitz 1 in diesem Fall an dem Gurt 10 zu fixieren, kann im Bereich der Oberkante 15 der Rückenlehne 5, etwa oberhalb einer Arm- oder Schulterstütze 7, eine Klemmvorrichtung 16 zum Einklemmen des Schultergurtes 9 vorgesehen sein. Es kann sich hierbei um einen mit einem Ende scharnierartig angelenkten Bügel handeln, der an seinem freien Ende bspw. mit einem Haken od. dgl. versehen ist.

Der Kindersitz 1 ist hinsichtlich seiner Neigung verstellbar. Zu diesem Zweck ist an der Unterseite 17 der Sitzfläche 4 eine verstellbare Aufstandsplatte 18 vorgesehen. Die Aufstandsplatte 18 kann bspw. aus Metall oder einem Kunststoff bestehen. Sie kann in ihrer Mitte nach oben durchgewölbt sein. Die Aufstandsplatte 18 hat vorzugsweise eine etwa quadratische Umfangsform. Die Umfangsform der Aufstandsplatte 18 entspricht etwa der Sitzfläche 4, ist jedoch kleiner als deren Unterseite 17. Seitlich außerhalb eines der Aufstandsplatte 18 entsprechenden Bereichs ist die Sitzschale 2 in Form einer rundumlaufenden Schürze 19 herabgezogen, so dass sich an der Sitzunterseite 17 eine muldenförmige Vertiefung 20 zur Aufnahme der Aufstandsplatte 18 befindet.

Die Aufstandsplatte 18 weist im Bereich ihrer in Sitzrichtung gesehen hinteren Ecken je einen seitlich auskragenden, zapfenartigen Achsstummel 21 auf. An den betreffenden Stellen ist die Schürze 19 mit zwei hinterschnittenen, schlitzförmigen Ausnehmungen 22 versehen, in welche je ein Achsstummel 21 unter vorübergehender Aufweitung der verjüngten Schlitzöffnung 23 eingeschnappt werden kann und sodann nach Art einer Gleitlagerung verschwenkbar gelagert ist. Da die beiden Achsstummel 21 sowie die dafür vorgesehenen Ausnehmungen 22 in der Schürze 19 jeweils untereinander fluchten, kann die Aufstandsplatte 18 um diese Drehachse 24 verschwenkt werden.

Der jeweilige Schwenkwinkel der Aufstandsplatte 18 gegenüber dem Kindersitz 1 wird eingestellt mittels einer im vorderen Bereich der Sitzunterseite 17 angeordneten Einrichtung. Dort befinden sich an der Sitzunterseite 17 seitlich nebeneinander mehrere, miteinander fluchtende, schlitzförmige Ausnehmungen 25, 26 als Gleitlager zur Aufnahme einer quer zur Sitzrichtung verlaufenden Achse 27. Damit die Achse 27 in den Schlitzen 25, 26 gehalten wird, haben letztere gewölbte Schlitzinnenseiten 28 von der Form eines die Achse 27 entlang eines Bogens von mehr als 180° umgebenden Hohlzylindersegments, nach dem selben Prinzip wie die Ausnehmungen 22 zur verschwenkbaren Führung der Achsstummel 21.

Die Achse 27 tritt mit beiden Enden seitlich durch die Schürze 19 hindurch und ist dort mit Betätigungselementen, bspw. in der Form von Handrädern 29, versehen. Innerhalb der Schürze 19 trägt die Achse 27 zwei Nocken 30. Diese haben etwa die Gestalt einer Scheibe mit zwei deckungsgleichen Stirnseiten 31 und einer zwischen diesen rundumlaufenden Mantelfläche 32. Der Umfang der Stirnseiten 31 folgt etwa einem spiralförmigen Verlauf mit einem achsennahen bzw. proximalen Bereich 33 und einem achsenfernen bzw. radial erweiterten oder distalen Bereich 34.

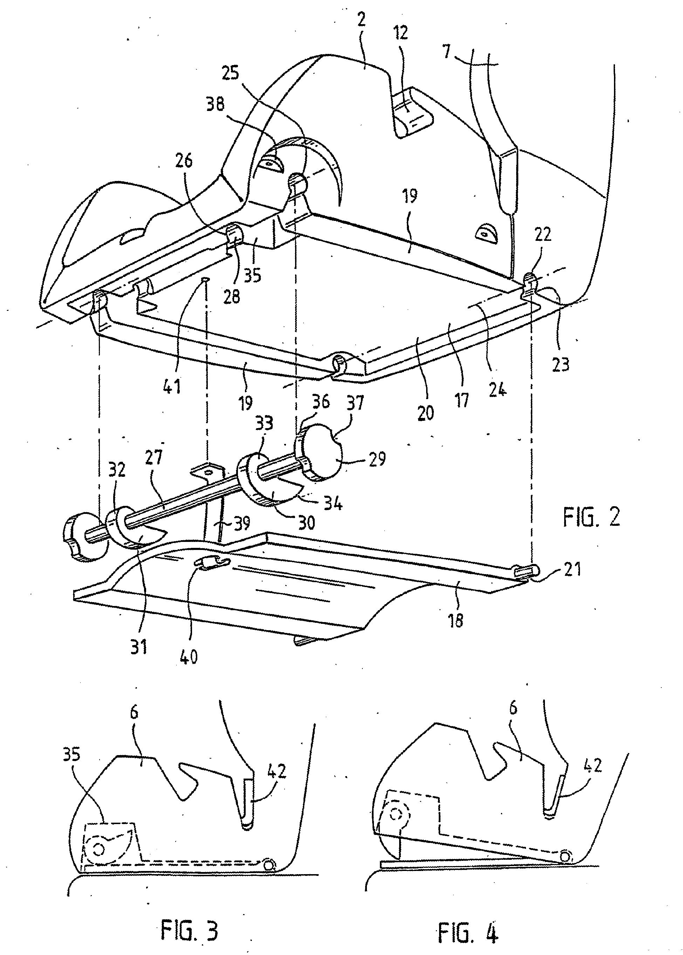

Oberhalb der beiden Nocken 30 befinden sich in der Sitzunterseite 17 Vertiefungen 35, in welche die Nocken 30 selbst mit ihren radial erweiterten Bereichen 34 einzutauchen vermögen. Da sich die Ausnehmungen 25, 26 zur verdrehbaren Lagerung der Achse 27 oberhalb der Mulde 20 befinden, kann die Aufstandsplatte 18 ganz in die Mulde 20 hineingeschwenkt werden, wenn die Nocken 30 mit ihren radial erweiterten Bereichen 34 weg bzw. in die Vertiefungen 35 hinein geschwenkt sind. Der Sitz 1 steht auf der umlaufenden Schürze 19 auf und nimmt gegenüber dem Fahrzeugsitz eine aufrechte Position ein, vgl. Fig. 3.

Wird nun die Achse 27 mit den Handrädern 29 manuell gedreht, bspw. um etwa 180°, so treten die radial erweiterten Nockenbereiche 34 aus den Vertiefungen 35 in der Sitzunterseite 17 hervor und drücken auf die Aufstandsplatte 18. Da diese auf dem Fahrzeugsitz aufliegt, wird stattdessen der vordere Teil der Sitzfläche 4 von der Achse 27 angehoben - der Sitz 1 nimmt eine nach rückwärts geneigte (Erholungs-) Position ein, vgl. Fig. 4.

Damit die jeweilige Sitzposition stabil ist, können in der Außenseite der Handräder 29, insbesondere in deren Mantelfläche 36, vorzugsweise radiale Vertiefungen 37 vorgesehen sein, in welche in einer Sitzendposition jeweils ein sitzeigener Fortsatz 38 einrastet.

Damit die Aufstandsplatte 18 beim Abheben des Kindersitzes 1 von einem Fahrzeugsitz nicht herabschwenkt, wird ihre maximale Schwenkbewegung begrenzt. Dazu dient ein kurzer Riemen 39, der mit einem Ende an der Aufstandsplatte 18 im Bereich von deren Vorderkante verankert 40 ist, und der andererseits an der Sitzunterseite 17 befestigt 41 ist. Das zweite Ende des Riemens 39 könnte auch schlaufenartig ausgebildet und um die Achse 27 in deren mittlerem Abschnitt geschlungen sein. Die Länge des Riemens 39 begrenzt den Schwenkwinkel der Aufstandsplatte 18.

Wenn der Kindersitz 1 für ein Kleinkind verwendet wird und in aufrechter Position gemäß Fig. 3 auf einem Fahrzeugsitz festgeschnallt wird, so ist der Gurt 10 in die hinteren Gurtführungen 14 einzulegen und wird in gestrafftem Zustand mit seinem Schulterabschnitt an der Klemmvorrichtung 16 fixiert. Soll nun der Kindersitz 1 in die geneigte Position gemäß Fig. 4 verbracht werden, so wird dabei die Sitzfläche 4 von der Rückenlehne 5 gegenüber der Rückenlehne des Fahrzeugs nach vorne gedrückt. Eine solche Bewegung würde jedoch von dem in gestrafftem Zustand eingeklemmten Fahrzeuggurt 10 verhindert, weil sich dadurch der Beckenabschnitt des Gurtes 10 nicht verlängern kann.

Zur Abhilfe sind im Bereich der rückwärtigen Gurtführungen 14 Gurtstraffer 42 vorgesehen, welche dem Gurt 10 bei Bedarf einen gewissen Bewegungsspielraum verleihen. Hierzu weisen die hinteren, schlitzförmigen Gurtführungen 14 zwischen Armlehnen 6 und Rückenlehne 5 an ihren rückwärtigen Innenseiten 43, also dort, wo der Beckenteil des Fahrzeuggurtes 10 anliegt, gegenüber der Sitzschale 2 in Sitzrichtung bewegliche Oberflächenbereiche 44 auf.

Diese Oberflächenbereiche 44 werden elastisch nach vorne gedrückt. Dabei ist ihre Elastizitäts- oder Federkonstante so eingestellt, dass sie kaum komprimiert werden, wenn der Kindersitz 1 an einem Fahrzeugsitz unter normaler Spannung des Fahrzeuggurtes 10 festgegurtet wird. Wenn der Kindersitz anschließend von der aufrechten Position nach Fig. 3 in die geneigte Erholungsposition nach Fig. 4 gekippt wird, so bewegt sich zwar die Sitzfläche 4 nach vorne; diese Relativbewegung gegenüber Fahrzeugsitz und -gurt 10 wird jedoch ermöglicht durch die dabei komprimierten Oberflächenbereiche 44 der Gurtstraffer 42.

Eine erste Möglichkeit zur Realisierung der Gurtstraffer 42 sowie deren elastisch beweglicher Oberflächenbereiche 44 ist in Fig. 5 wiedergegeben. Man erkennt ein etwa quaderförmiges Element 45 an der rückwärtigen Begrenzungsfläche 43 der schlitzförmigen Gurtführung 14. Dieses Element 45 hat eine langgestreckte Grundfläche mit einem etwa vertikalen Verlauf, und es kann in einer Vertiefung 46 der Schlitz-Begrenzungsfläche 43 mit etwa gleichem Umriß eingeklebt oder anderweitig fixiert sein. Das Element 45 besteht aus einem elastischen Material, bspw. aus Gummi oder aus einem (begrenzt) elastischen Kunststoff. Wenn die Elastizität des Materials zu niedrig ist, so können in dem quaderförmigen Element 45 zusätzliche Ausnehmungen vorgesehen sein. Hierbei kann es sich auch um innere Hohlräume 47 handeln, die von außen nicht sichtbar sind. Die Gestalt solcher Ausnehmungen oder Hohlräume 47 kann vielfältig sein, bspw. quaderförmig oder prismatisch mit länglicher oder drei- oder mehreckiger oder runder oder ovaler Grundfläche oder bspw. kugelförmig. Sofern es diese Ausnehmungen oder Hohlräume 47 eine wohldefinierte Form aufweisen, erhält man eine ebenfalls definierte Elastizität.

Eine andere Ausführungsform eines Gurtstraffers 42' zeigt Fig. 6. Dort ist der bewegliche Oberflächenbereich 44' an einem formstabilen Element 45' angeordnet. Dieses hat ebenfalls eine längliche Grundform mit einer quaderförmigen Gestalt, an der im unteren Bereich eine nach vorne ragende Nase 48 angeformt sein kann, um den fahrzeugeigenen Gurt 10 zu untergreifen und vor einem Verrutschen zu bewahren. Das formstabile Element 45' ist teilweise in einer Vertiefung 46' der Schlitz-Begrenzungsfläche 43 aufgenommen. Zwischen der Rückseite 48 des formstabilen Elements 45' und dem Boden 49 der Vertiefung 46' befinden sich ein oder mehrere Druckfedern 50, die bestrebt sind, diese beiden Flächen 48, 49 auseinander zu drücken. Dadurch wird das formstabile Element 46 nach vorne vorgespannt. Damit es nicht ganz aus der Ausnehmung 46' herausgedrückt wird, kann ein Anschlagelement 51 vorgesehen sein, bspw. ein an der Sitzschale 2 befestigter Schaft 52 mit einem Haken, der in eine Ausnehmung in der Rückseite 48 des formstabilen Elements 45' ein- und eine dort angeordnete Hinterschneidung um- oder hintergreift. Um die Federn 50 an ihren Positionen zu halten, können sie auf Zapfen 53 aufgesteckt sein, die an der Rückseite 48 des formstabilen Elements 45' oder an dem Boden 49 der Vertiefung 46' festgelegt oder angeformt sind, oder sie sind in dort angeordneten Vertiefungen 54 aufgenommen und dadurch geführt.

## Patentansprüche

1. Auto-Kindersitz (1) mit einer Sitzfläche (4), einer Rückenlehne (5), ggf. mit seitlichen Arm- und/oder Kopfstützen oder -lehnen (6-8), mit seitlichen Führungen (12,14) zum Einlegen des Gurtes (10) eines Autos und mit wenigstens einer Vorrichtung (42;42') zur selbsttätigen Straffung des Autogurtes (10), sowie mit einer Vorrichtung zur Verstellung der Neigung des Auto-Kindersitzes (1) gegenüber einem fahrzeugeigenen Sitz, wobei der fahrzeugeigene Gurt (10) die Rückenlehne (5) des Kindersitzes (1) umgreift, und wobei die Vorrichtung (42;42') zur selbsttätigen Straffung des Autogurtes (10) Oberflächenbereiche (44;44') aufweist, welche elastisch nach vorne gedrückt werden, um dem Gurt (10) bei Bedarf einen gewissen Bewegungsspielraum zu verleihen, **dadurch gekennzeichnet, dass**
a) die Vorrichtung (42;42') zur selbsttätigen Straffung des Autogurtes (10) Gurtstraffer (42;42') aufweist, die im Bereich der Gurtführungen (12,14) für den über das Becken verlaufenden Strang des Auto-Dreipunktgurtes (10) angeordnet sind und an diesen Stellen auf den Beckengurt einwirken sowie zumindest an einer Seite des Sitzes gleichzeitig auch auf den Schultergurt dank dessen Verlaufs in großer räumlicher Nähe, derart, dass die von einem Gurtstraffer (42;42') geleistete Längenausgleichsfähigkeit des Gurtes insgesamt verdreifacht ist, und wobei
b) im oberen Bereich der Rückenlehne (5) wenigstens eine Vorrichtung zur unverschieblichen Fixierung des Auto-Schultergurtes (9) gegenüber dem Auto-Kindersitz (1) vorgesehen ist, insbesondere durch (festes) Einklemmen des Auto-Schultergurtes (9).

2. Auto-Kindersitz (1) nach Anspruch 1, **dadurch gekennzeichnet, dass** die Vorrichtung (42;42') zur Gurtstraffung ein zumindest bereichsweise gegenüber der Sitzfläche (4) und/oder Rückenlehne (5) bewegliches Element (44,45;44',45') aufweist.

3. Auto-Kindersitz (1) nach Anspruch 2, **gekennzeichnet durch** ein oder mehrere Federelemente (50), welche das bewegliche Element (44,45;44',45') der Vorrichtung (42;42') zur Gurtstraffung in Richtung auf den Autogurt (10) zu drücken bestrebt sind.

4. Auto-Kindersitz (1) nach Anspruch 3, **dadurch gekennzeichnet, dass** wenigstens ein Federelement (50) durch eine Druckfeder gebildet ist, die zwischen dem beweglichen Element (44,45;44',45') und der Sitz- oder Armlehne (5,6) oder Arm- bzw. Schulterstütze (7) angeordnet ist.

5. Auto-Kindersitz (1) nach einem der vorhergehenden Ansprüche, **dadurch gekennzeichnet, dass** wenigstens ein Element (44,45;44',45') der Vorrichtung (42;42') zur Gurtstraffung elastisch ist.

6. Auto-Kindersitz (1) nach Anspruch 5, **dadurch gekennzeichnet, dass** wenigstens ein Element (44,45;44',45') der Vorrichtung (42;42') zur Gurtstraffung aus einem elastischen Material mit einer Shore-Härte zwischen 30 und 80, vorzugsweise von 40 bis 70, insbesondere von 50 bis 60.

7. Auto-Kindersitz (1) nach Anspruch 5 oder 6, **dadurch gekennzeichnet, dass** wenigstens ein Element (44,45;44',45') der Vorrichtung (42;42') zur Gurtstraffung die Elastizität erhöhende Ausnehmungen, insbesondere Durchbrechungen und/oder Hohlräume (47), aufweist.

8. Auto-Kindersitz (1) nach einem der vorhergehenden Ansprüche, **dadurch gekennzeichnet, dass** die Vorrichtung zur Verstellung der Neigung des Auto-Kindersitzes (1) gegenüber einem fahrzeugeigenen Sitz derart ausgebildet ist, dass diese Verstellung im Ganzen erfolgt, d.h. ohne Relativbewegung der Rückenlehne (5) gegenüber der Sitzfläche (4).

9. Auto-Kindersitz (1) nach Anspruch 8, **dadurch gekennzeichnet, dass** die Vorrichtung zur Verstellung der Neigung des Auto-Kindersitzes (1) durch ein an der Unter- oder Rückseite (17) des Sitzes (1) angelenktes, platten- oder rahmenförmiges Teil (18) gebildet ist.

10. Auto-Kindersitz (1) nach Anspruch 9, **dadurch gekennzeichnet, dass** das an der Unter- oder Rückseite (17) des Sitzes (1) angelenkte, platten- oder rahmenförmige Teil (18) um eine quer zur Sitz- bzw. Fahrtrichtung verlaufende Achse (21,24) verschwenkbar ist.

11. Auto-Kindersitz (1) nach Anspruch 10, **gekennzeichnet durch** eine Einrichtung zur Einstellung des Neigungswinkels des verschwenkbaren, platten- oder rahmenförmigen Teils (18) gegenüber dem Sitzboden (17).

12. Auto-Kindersitz (1) nach Anspruch 11, **dadurch gekennzeichnet, dass** die Einrichtung zur Einstellung des Neigungswinkels des verschwenkbaren Teils (18) wenigstens ein nockenförmiges Element (30) aufweist, das sich in dem Bereich zwischen dem Sitz (1) und dessen verschwenkbarem Element (18) befindet.

## Claims

1. Child's car seat (1) with a seat surface (4), a back rest (5), optionally with side arm supports and/or head supports or rests (6-8), with side guides (12, 14) for the insertion of the belt (10) of a car, and with at least one device (42;42') for the automatic tightening of the car belt (10), and with a device for adjusting the inclination of the child's car seat (1) relative to the vehicle's own seat, whereby the vehicle's own belt (10) surrounds the back rest (5) of the child's car seat (1), and whereby the device (42;42') for the automatic tightening of the car belt (10) comprises surface areas (44;44') which can be pushed forward in an elastic manner to give some clearance of motion to the belt (10) on demand, **characterized in that**
a) the device (42;42') for the automatic tightening of the car belt (10) comprises belt tighteners (42;42'), which are placed in the area of the belt guides (12, 14) for the length of the three-point belt (10) that runs over the pelvis, and which act on the pelvic restraint at these places as well as at the same time at least on one side on the shoulder belt, too, because of its course in great proximity, such that the length-compensation capability for the belt provided by a belt tightener (42;42') is tripled overall, and whereby
b) at least one device is provided in the top area of the back rest (5) for fastening the car shoulder belt (9) immovably relative to the child's car seat (1), in particular by (firm) clamping of the car shoulder belt (9).

2. Child's car seat (1) according to claim 1, **characterized in that** the device (42;42') for belt-tightening has an element (44, 45;44', 45') that is movable at least regionally relative to the seat surface (4) and/or the back rest (5).

3. Child's car seat (1) according to claim 2, **characterized by** one or more spring elements (50) that try to press the movable element (44, 45;44', 45') of the belt-tightening device (42;42') toward the car belt (10).

4. Child's car seat (1) according to claim 3, **characterized in that** at least one spring element (50) consists of a compression spring that is positioned between the movable element (44, 45;44', 45') and the seat rest [*sic*] or arm rest (5, 6) or the arm support or shoulder support (7).

5. Child's car seat (1) according to one of the preceding claims, **characterized in that** at least one element (44, 45;44', 45') of the belt-tightening device (42;42') is elastic.

6. Child's car seat (1) according to claim 5, **characterized in that** at least one element (44, 45;44', 45') of the belt-tightening device (42;42') consists of an elastic material with a Shore hardness between 30 and 80, preferably from 40 to 70, and especially from 50 to 60.

7. Child's car seat (1) according to claim 5 or 6, **characterized in that** at least one element (44, 45;44' 45') of the belt-tightening device (42;42') has cutouts that increase elasticity, in particular openings or cavities (47).

8. Child's car seat (1) according to one of the preceding claims, **characterized in that** the device for adjusting the inclination of the child's car seat (1) relative to the vehicle's own seat is made so that this adjustment occurs as a whole, i.e. without relative motion of the back rest (5) with respect to the seat surface (4).

9. Child's car seat (1) according to claim 8, **characterized in that** the device for adjust the inclination of the child's car seat (1) consists of a plate- or framework-shaped component (18) hinged to the bottom or back (17) of the seat (1).

10. Child's car seat (1) according to claim 9, **characterized in that** the plate- or framework-shaped component (18) hinged to the bottom or back (17) of the seat (1) can pivot around a shaft (21, 24) perpendicular to the seat direction and the direction of travel.

11. Child's car seat (1) according to claim 10, **characterized by** a mechanism for setting the angle of inclination of the plate- or framework-shaped component (18) relative to the seat bottom (17).

12. Child's car seat (1) according to claim 11, **characterized in that** the mechanism for setting the angle of inclination of the pivotable component (18) has at least one cam-like element (30) that is located in the area between the seat (1) and its pivotable element (18).

## Revendications

1. Siège auto pour enfants (1) comprenant une assise (4), un dossier (5), le cas échéant, avec des renforts latéraux pour les bras et/ou la tête ou accoudoirs (6-8), avec des guides latéraux (12, 14) pour introduire la ceinture (10) d'une voiture et au moins un dispositif (42 ; 42') servant à la tension automatique de la ceinture de la voiture (10) ainsi qu'un dispositif de réglage de l'inclinaison du siège auto pour enfants (1) par rapport à un siège propre au véhicule, où la ceinture propre au véhicule (10) entoure le dossier (5) du siège pour enfant (1), et où le dispositif (42 ; 42') présente des zones superficielles (44 ; 44') pour la tension automatique de la ceinture de la voiture (10), lesquelles exercent une pression élastique vers l'avant pour conférer à la ceinture (10), si besoin, une certaine marge de déplacement, **caractérisé en ce que**,
a) le dispositif (42 ; 42') pour la tension automatique de la ceinture de la voiture (10) présente des tenseurs de ceinture (42 ; 42') qui sont placés au niveau des guides de ceinture (12, 14) pour la sangle de la ceinture de voiture trois points (10) passant au-dessus du bassin et agissant en ces points sur la sangle abdominale ainsi que,au moins sur un côté du siège, simultanément aussi sur la sangle d'épaule grâce à son passage à grande proximité de façon telle que la fonction de compensation de longueur de la ceinture réalisée par un tenseur de ceinture (42 ; 42') est au total triplée, et où
b) au niveau supérieur du dossier (5) est prévu au moins un dispositif pour la fixation non mobile de la sangle d'épaule de la ceinture de la voiture (9) par rapport au siège d'auto pour enfants (1), en particulier par serrage (fixe) de la sangle d'épaule de la ceinture de la voiture (9).

2. Siège auto pour enfants (1) selon la revendication 1, **caractérisé en ce que** le dispositif (42 ; 42') pour la tension de la ceinture présente au moins zone par zone par rapport à l'assise (4) et/ou au dossier (5) un élément mobile (44, 45 ; 44' ; 45').

3. Siège auto pour enfants (1) selon la revendication 2, **caractérisé par** un ou plusieurs éléments de ressort (50), lesquels s'appliquent à appuyer l'élément mobile (44, 45 ; 44', 45') du dispositif (42 ; 42') pour la tension de la ceinture vers la ceinture de la voiture (10).

4. Siège auto pour enfants (1) selon la revendication 3, **caractérisé en ce qu'**au moins un élément de ressort (50) est formé par un ressort de pression qui est disposé entre l'élément mobile (44, 45 ; 44', 45') et le dossier du siège ou l'accoudoir (5, 6) ou l'appuie-bras ou le support d'épaules (7).

5. Siège auto pour enfants (1) selon l'une des revendications précédentes, **caractérisé en ce qu'**au moins un élément (44, 45 ; 44', 45') du dispositif (42 ; 42') est élastique pour la tension de la ceinture.

6. Siège auto pour enfants (1) selon la revendication 5, **caractérisé en ce qu'**au moins un élément (44, 45 ; 44', 45') du dispositif (42 ; 42') pour la tension de la ceinture consiste en un matériau élastique d'une dureté Shore comprise entre 30 et 80, de préférence entre 40 et 70, en particulier entre 50 et 60.

7. Siège auto pour enfants (1) selon la revendication 5 ou 6, **caractérisé en ce qu'**au moins un élément (44, 45 ; 44', 45') du dispositif (42 ; 42') pour la tension de la ceinture présente des encoches augmentant l'élasticité, en particulier des ouvertures et/ou des cavités (47).

8. Siège auto pour enfants (1) selon l'une des revendications précédentes, **caractérisé en ce que** le dispositif pour le réglage de l'inclinaison du siège auto pour enfants (1) par rapport à un siège propre au véhicule est tel que ce réglage est effectué dans l'ensemble, c.-à-d. sans déplacement relatif du dossier (5) par rapport à l'assise (4).

9. Siège auto pour enfants (1) selon la revendication 8, **caractérisé en ce que** le dispositif pour le réglage de l'inclinaison du siège auto pour enfants (1) est réalisé par une partie articulée, de forme plate ou en forme de cadre (18) sur la face inférieure ou arrière (17) du siège (1).

10. Siège auto pour enfants (1) selon la revendication 9, **caractérisé en ce que** la partie articulée, de forme plate ou en forme de cadre (18) sur la face inférieure ou arrière (17) du siège (1) peut pivoter d'un axe (21, 24) transversal par rapport au sens du siège ou de la marche.

11. Siège auto pour enfants (1) selon la revendication 10, **caractérisé par** un mécanisme de réglage de l'angle d'inclinaison de la partie de forme plate ou en forme de cadre (18) pouvant pivoter par rapport au dessous du siège (17).

12. Siège auto pour enfants (1) selon la revendication 11, **caractérisé en ce que** le mécanisme de réglage de l'angle d'inclinaison de la partie pivotante (18) présente au moins un élément en forme d'ergot (30) qui se trouve dans la zone située entre le siège (1) et son élément pivotant (18).
